# EUROPEAN PATENT SPECIFICATION

(11) **EP 3 358 263 B1**
(45) Date of publication and mention of the grant of the patent: **02.09.2020**
(21) Application number: 18152988.4
(22) Date of filing: 23.01.2018
(51) Int. Cl.: F24D 19/10, G05D 23/02

(54) **DEVICE AND METHOD FOR REGULATING HEATING SYSTEMS**
VORRICHTUNG UND VERFAHREN ZUR REGELUNG VON HEIZSYSTEMEN
DISPOSITIF ET PROCÉDÉ DE RÉGULATION DE SYSTÈMES DE CHAUFFAGE

(30) Priority: 30.01.2017 IT 201700009800
(43) Date of publication of application: 08.08.2018
(73) Proprietor: I.V.A.R. S.P.A., 25080 Prevalle (BS) (IT)
(72) Inventor: BERTOLOTTI, Umberto, Prevalle (IT)
(74) Representative: PGA S.p.A.

(56) References cited:
- WO-A1-2012/095107
- DE-U1-202015 006 660
- GB-A- 2 505 396

## Description

The object of the present invention is a regulating device for regulating heating systems, a heating system comprising this device, and a method for regulating heating systems.

In particular, the invention refers to a regulating device for regulating the temperature and the flow of a fluid, generally hot water, in systems for heating spaces in buildings for residential or commercial use or for other uses. The present invention thus falls within the technical field of heating systems.

It is known that heating systems for heating buildings are principally divided into high temperature systems and low temperature systems. High temperature systems essentially comprise a boiler, a series of heating elements (including radiators, thermosiphons, heaters, convectors, etc.) arranged in the various rooms of a building and a plurality of collectors and pipes connecting the boiler and the radiator elements. On the other hand, in addition to a boiler, low temperature systems comprise a plurality of radiant elements in the form of pipes, which are generally inserted under the flooring in the rooms, and at least one pair of collectors connecting the radiant elements to the boiler. While the systems of the first type operate with water at a high temperature, typically on the order of about 60-80°C, the systems of the second type must necessarily operate at lower temperatures, for example on the order of about 30-40°C, given that at higher temperatures there is a risk of deterioration of the flooring. There are also known mixed heating systems that comprise a high temperature circuit and a low temperature circuit, which are suitably connected with each other, and radiant elements of various types.

Also known is the realization of low temperature portions of systems, that is, with floor pipes, within a system that operates at high temperatures and that is therefore provided with a boiler that supplies high temperature water for operation of radiators, thermosiphons or convectors. In this case, the low temperature portions of a system must comprise suitable devices that are capable of managing and regulating the temperature of the fluid at different points of the system (that is, high temperature in the parts comprising radiators or thermosiphons and low temperature in the parts comprising radiant floor elements).

Specifically, this is the case when renovations or remodelling work is being done on buildings, which can comprise laying new flooring or creating new rooms (e.g. bathrooms) or in general, the partitioning of existing spaces. In this case, it may be advantageous - in the portions being renovated or remodelled - to opt for radiant floor elements, while keeping the original boiler and using the already existing supply of high temperature water employed for the radiant elements that are not floor elements (radiators or thermosiphons). In order to do this, while also avoiding that the use of high temperature water causes malfunctioning in the pipes or deterioration of the flooring, the relative system equipment specific for floor heating must be arranged (e.g. the mixing system, fluid circulator, etc.), which, however, is costly and complex and could prove to be economically inconvenient for the single portion of the building being remodelled or renovated (for example, just one room). In these cases, a known solution consists in diverting a new branch directly from the high temperature circuit (already present in the system) and from this new branch the radiant floor pipe extends. The latter follows its path under the flooring to then return back into the already existing circuit again. It is clear that this direct branch requires means that enables it to obtain and maintain the correct temperature of the water in the radiant pipe, which must be lower than the temperature of the water in the high temperature circuit.

According to known solutions, such means can consist in a valve device, which is called a "limit temperature controller" in this field. This device consists in a thermostatic valve located on a line and provided with a temperature-sensitive element that commands the opening or the closing of the valve proportionally to the difference between the temperature of the fluid in the line and a reference temperature at which the valve has been set: the greater the difference in temperature, the greater the opening of the valve and therefore of the flow of water passing through it. The limit temperature controller typically comprises a knob for selecting the reference temperature.;when the temperature of the water in the line on which the controller is assembled reaches the reference temperature, the valve closes completely and there is no passage of water.

In the known solutions, the limit temperature controller is located at the outlet of the radiant floor line, before the return towards the boiler, whereas flow regulating elements are not positioned at the inlet of the radiant line, which is directly diverted from the high temperature circuit. The reference temperature of the controller is then set, for example at about 30°C. When the system is turned on (with the floor line cold), the high temperature water (e.g. 60-70°C) from the high temperature circuit enters into the floor line and begins to heat. There is therefore an initial temperature peak in the radiant line, which is, however, of short duration, as at the outlet of the radiant line the limit temperature controller begins to receive a flow of hot water and gradually closes until it is totally closed, thus blocking the flow circulating in the floor line. This prevents additional high temperature water from entering the radiant line and damaging the flooring or excessively heating the room. As it proceeds inside the floor line and with the passing of time, the hot water in the floor line releases heat towards the room and it is thus cooled. As a result, the temperature perceived by the limit temperature controller drops below the reference temperature, which has been set for example at about 30°C. The controller thus re-opens and enables an amount of water to leave the floor line and this draws an equal amount of incoming high temperature water which flows through the floor line and maintains the correct heating level. When running, this system finds a balance in which the flow of water that the controller allows to leave the line in the period of time is very limited;therefore, even if the temperature of the incoming water is always very high, the flow rate thereof is limited. Generally, owing to the limit temperature controller managing the flow of water through the radiant line, the mean temperature of the latter that is obtained is correct for floor installation (that is, not too high) and for effective heating of the space (that is, not too low).

The solution described hereinabove thus makes it possible to connect a portion of a floor heating system directly to a system that operates at high temperatures, thereby obtaining, in any case, the correct temperature on the flooring.

It is further known from patent GB2505396 an apparatus to control a flow of heated water from a boiler to a water outlet, comprising a main housing defining an inlet, outlet and a flow path extending therebetween. The apparatus includes a first device, which restricts the heated water flow when the temperature of the water is below a first predetermined value. The first device comprises a bypass channel enabling permanent flow of heated water through the apparatus. The first device comprises a first thermostatic assembly having a temperature-sensitive expandable material that pushes a first rod against a retaining wall element so as to resist a force of a spring to open a variable opening.

However, the Applicant has noted that this known solution is not without drawbacks and that it is improvable in several aspects. In fact, the operation of the limit temperature controller in theory makes it possible to find a point of fluid-dynamic equilibrium between water (which has released heat and has thus dropped in temperature) leaving the radiant line and new water (at high temperature) entering the radiant line. However, in practice the limit temperature controller is connected to other components of the circuit, or included inside a heating plant, in which additional valves, collectors, pipes, pumps, etc. are present and which are needed for the operation of the entire heating system, which often also includes parts operating at high temperatures and parts operating at low temperatures. A heating plant is typically made up of a specific case that is located in a room, or applied to wall or built into a compartment afforded in a wall. The heating plant is also provided with a door that enables access thereto.

In this state, the limit temperature controller thus operates in contact with or in proximity to elements of the system in which high temperature water flows, for example the pipes or the valves of the high temperature heating part and which can even reach temperatures of and over 80°C. Therefore, the temperature inside the entire heating plant tends to rise (for example up to and beyond 40°C) and the body of the limit temperature controller is also affected by this undesired heating effect. This constitutes a serious obstacle for proper operation of the radiant floor pipe. In fact, let us suppose that the limit temperature controller receives, from the end of the radiant line, water at a temperature equal to the reference temperature at which it has been set, and that it is therefore brought into the closed configuration. With the passing of time, the radiant floor pipe cools (as it yields heat to the room) and the controller should perceive, water (incoming thereto) at a lower temperature. However, the water stopped at the inlet to the controller is heated by virtue of the overall heating of the heating plant (that is, of the entire case) and the sensitive element inside the controller continues to perceive a high temperature of the water, despite the fact that the floor line has cooled. This prevents the limit temperature controller valve from opening and therefore water cannot leave the radiant line and new hot water cannot enter from the point of the branch from the high temperature circuit. The result is a lowering of the temperature of the radiant line and therefore insufficient heating of the space, even if the entire system is actually operative.

Note that heating inside the heating plant, and the resulting undesired "lockout" of the limit temperature controller, despite the fact that the radiant line is cooling (and needs an amount of high temperature water to enter), are present regardless of the type or structure of the heating plant and irrespective of how the high temperature parts of the system are operating.

This drawback is of deep concern in places where outside temperatures are very harsh, in which the systems must necessarily operate with water of very high temperatures;this increases the overheating of the components inside the heating plant and thus also of the limit temperature controller. In some cases, it is necessary to wait until the heating plant cools before one can rely on proper operation of the limit temperature controller again.

In this situation, the aim underlying the present invention in its various aspects and/or embodiments is to make available a device and a method for regulating heating systems which can be capable of overcoming one or more of the drawbacks cited hereinabove.

A further aim of the present invention is to make available a regulating device for regulating heating systems which is capable of operating correctly inside heating plants or in proximity to components of a heating system operating at high temperatures.

A further aim of the present invention is to make available a device and a method for regulating heating systems which make it possible to effectively connect a radiant floor pipe to a high temperature circuit, enabling proper management of the operating temperatures and of the flows inside the pipe.

A further aim of the present invention is to make available a regulating device for regulating heating systems, said device being characterized by a high level of versatility and being capable of adapting to a great number and various types of different heating plants.

A further aim of the present invention is to make available a regulating device for regulating heating systems, said device being characterized by a high level of operating reliability and/or by less susceptibility to damage and malfunctioning and/or being capable of offering simple and rapid maintenance and replacement. A further aim of the present invention is to make available a regulating device for regulating heating systems which is characterized by a simple and rational structure.

A further aim of the present invention is to make available a regulating device for regulating heating systems which is characterized by limited production costs with respect to the performance and quality offered.

A further aim of the present invention is to create alternative solutions with respect to the prior art for realizing regulating devices for regulating heating systems and/or to open new fields of design.

A further aim of the present invention is to make available a regulating device that is capable of permitting new heating system designing.

These and any other aims, which shall become evident in the course of the description below, are substantially achieved by a regulating device for regulating heating systems, a heating system comprising this device and a method for regulating heating systems, according to one or more of the appended claims, each of which being considered alone (without the relative dependent claims) or in any combination with the other claims, as well as according to the following aspects and/or embodiments, in various combinations, also with the above-mentioned claims.

In a first aspect, the invention concerns a regulating device for regulating heating systems, comprising:
- a body of the device provided with at least one inlet, which is intended to be connected to a line so as to receive a fluid therefrom, an outlet, which is intended to be connected to a respective line so as to send a fluid thereto, and an interception area within said body and interposed between, and connecting, said inlet and said outlet, in such a way that said inlet and said outlet can be selectively set into fluid communication with each other;
- a valve element that can be at least partially housed inside the body of the device and that is operatively active in said interception area, said valve element being configured to operate in a plurality of operating configurations so as to vary the flow rate of fluid passing from said inlet to said outlet, through said interception area, as a function of the difference in temperature between a perceived temperature of the fluid at said inlet and a reference temperature at which the valve element is configured.

In one aspect, said plurality of operating configurations comprise (or ranges between) at least one maximum aperture configuration, in which there is a maximum flow rate of fluid passing from said inlet to said outlet, and a closed configuration, corresponding to a state in which said detected temperature of the fluid at the inlet is equal to or higher than said reference temperature.

According to the invention, in said closed configuration, there is (or is envisaged) a residual flow rate of fluid transferred from said inlet to said outlet, said residual flow rate strictly being greater than zero.

In one aspect, the valve element comprises members for the selection of said reference temperature, so that when the fluid incoming to said inlet reaches or exceeds this reference temperature, the valve element is brought into said closed configuration.

In one aspect, said residual flow rate of fluid transferred from said inlet to said outlet in said closed configuration is comprised between 1 litre/hour and 10 litres/hour.

In one aspect, said residual flow rate of fluid transferred from said inlet to said outlet in said closed configuration is comprised between 2 litres/hour and 8 litres/hour.

In one aspect, said residual flow rate of fluid transferred from said inlet to said outlet in said closed configuration is comprised between 3 litres/hour and 6 litres/hour.

In one aspect, said residual flow rate of fluid transferred from said inlet to said outlet in said closed configuration is comprised between 3.5 litres/hour and 5 litres/hour.

According to the invention, said valve element comprises a thermostatic element (or thermostatic valve) inserted in said body and comprising a movable shutter configured to move closer and away from a passage section defined in said interception area so as to vary said flow rate of fluid passing from said inlet to said outlet according to said plurality of operating configurations.

According to the invention, said shutter is configured to move closer to the passage section upon a decrease in the difference between the perceived temperature of the fluid at the inlet and said reference temperature, decreasing said flow rate, and to move away from the passage section upon an increase in the difference between the perceived temperature of the fluid at the inlet and said reference temperature, increasing said flow rate.

According to the invention, in said closed configuration, there is controlled leakage of fluid at said valve element in the interception area, said leakage determining the passage of said residual flow rate of fluid from said inlet to said outlet.

In one aspect, said leakage ensures the transfer of said residual flow rate of fluid in each operating configuration of the valve element, and particularly in said closed configuration.

In one aspect, said valve element comprises a temperature-sensitive thermostat, said thermostat being configured to vary its dimensions as a function of the temperature it perceives, said shutter being associated with or constrained to said thermostat.

In one aspect, the thermostat is axially inserted in said body, in such a way as to occupy at least partially said interception area, and it is configured so as to modify its own length as a function of the temperature of the fluid at said inlet, as perceived by the thermostat itself.

In one aspect, the thermostat increases in length upon an increase in the perceived temperature, bringing said shutter closer to the passage section, and decreases in length upon a decrease in the perceived temperature, bringing said shutter away from the passage section.

In one aspect, the shutter moves so as to abut on said the passage section when the valve element is brought into said closed configuration.

In one aspect, the shutter has a substantially disc or ring shape and is positioned around the thermostat, preferably coaxially with respect to the longitudinal extension of the thermostat.

In one aspect, the shutter has a lower surface facing said passage section defined in the interception area and preferably having a circular crown shape, and an upper surface opposite said lower surface.

In one aspect, the thermostat is positioned in said interception area so as to pass through said passage section, leaving a preferably ring-shaped passage free between the thermostat and the inner walls of the body of the device or of the valve element.

According to the invention, said lower surface moves away from said passage section as the thermostat decreases in length (upon a decrease in the perceived temperature), moves closer to the passage section as the thermostat increases in length (upon an increase in the perceived temperature), and moves so as to abut on a preferably ring-shaped perimeter surface of said passage section when the valve element is brought into the closed configuration.

In one aspect, the lower surface has at least one hollow portion recessed from the lower surface (towards the upper surface), so that when the shutter is positioned so as to abut on the perimeter surface of the passage section, that is, when the valve element is brought into the closed configuration, between the perimeter surface and said at least one hollow portion, a free channel is realized in said passage section (even though the shutter abuts on the perimeter surface of the passage section), through which the passage of said residual flow rate of fluid takes place from the inlet to the outlet of the device.

According to the invention, the body of the device comprises a bypass line or passage extending between and connecting said inlet to said outlet and configured to ensure the transfer of said residual flow rate of fluid in each operating configuration of the valve element and particularly in said closed configuration. In one aspect, said bypass line is defined at or near said interception area.

According to the invention, said bypass line is defined at said passage section. In one aspect, said bypass line is defined, within said body, at said thermostatic valve and particularly at said thermostat and/or said shutter.

According to the invention, said bypass line is configured to transfer fluid present immediately upstream of said thermostatic valve towards said outlet with a flow rate equal to said residual flow rate of fluid.

In one aspect, said residual flow rate of fluid transferred from said inlet to said outlet is present in each operating configuration of said valve element.

In an independent aspect thereof, the present invention concerns a heating system comprising a regulating device for regulating heating systems according to one or more of the above aspects.

In one aspect, the heating system comprises at least one radiant pipe intended for floor installation and configured to heat a space, said radiant pipe extending between an inlet end, which is intended to be fluidly (hydraulically) connected directly with a source of high temperature fluid so as to receive high temperature fluid therefrom, and an outlet end, which is intended to be fluidly (hydraulically) connected with a low temperature circuit directed to a heat generator so as to admit low temperature fluid therein, said pipe comprising, between said inlet end and said outlet end, a coiled portion configured to transmit radiant heat from the fluid, flowing therein, outwards.

In one aspect, the regulating device for regulating heating systems is located downstream of said coiled portion and upstream of said outlet end of the radiant pipe so as to intercept the flow of fluid flowing in said pipe, wherein the inlet of the regulating device receives fluid coming from said coiled portion, the device transmits a flow rate for this fluid to the outlet of the device based on the operating configuration of the valve element of the device, and the outlet of the device is fluidly connected with said outlet end of the radiant pipe.

In one aspect, the heating system further comprises a thermostatic valve for temperature control of a space, preferably a thermostatic head, located along said radiant pipe at a point downstream of said regulating device, said thermostatic valve for temperature control of a space being configured so as to enable the selection of a desired temperature for the space in which the heating system is installed and therefore to regulate the flow rate of fluid circulating in the radiant pipe as a function of, or proportionally to, the difference between a temperature detected in the space and said desired temperature for the space.

In an independent aspect thereof, the present invention concerns a method for regulating heating systems, comprising the steps of:
- arranging a radiant pipe intended for floor installation and configured to heat a space, said radiant pipe extending between an inlet end, which is intended to be directly fluidly connected with a source of high temperature fluid so as to receive high temperature fluid therefrom, and an outlet end, which is intended to be fluidly connected with a heat generator so as to admit low temperature fluid therein, said pipe comprising, between said inlet end and said outlet end, a coiled portion configured to transmit radiant heat from the fluid, flowing therein, outwards;
- arranging at least one regulating device for heating systems according to one or more of the above aspects.

In one aspect, in said step of arranging at least one device, the latter is located downstream of said coiled portion and upstream of said outlet end of the radiant pipe so as to intercept the flow of fluid flowing in said pipe, wherein the inlet of the regulating device receives fluid coming from said coiled portion and the device transmits a flow rate for this fluid to the outlet of the device based on the operating configuration of the valve element of the device, and the outlet of the device is fluidly connected with said outlet end of the radiant pipe.

In one aspect, the method further comprises the step of circulating a fluid in said radiant pipe, in which the flow rate of fluid passing from the inlet to the outlet of the regulating device, through said interception area, is a function of, or proportional to, the difference in temperature between a perceived temperature of the fluid at said inlet and a reference temperature at which the valve element is configured, and in which the flow rate passing from the inlet to the outlet of the regulating device and conveyed towards said outlet end of the radiant pipe is equal to the incoming flow rate at said inlet end of the radiant pipe.

In one aspect, said step of circulating a fluid in said radiant pipe comprises a step of maintaining a residual flow rate, greater than zero, of fluid transferred from the inlet to the outlet of the regulating device (at least) when the valve element is in said closed configuration.

In one aspect, in said step of maintaining a residual flow rate of fluid, the residual flow rate of fluid is comprised between 2 litres/hour and 8 litres/hour and/or comprised between 3 litres/hour and 6 litres/hour and/or comprised between 3.5 litres/hour and 5 litres /hour.

In one aspect, in said step of maintaining a residual flow rate of fluid, this residual flow rate continuously recirculates the fluid through the regulating device, even with the latter being in the closed configuration.

In one aspect, in said step of maintaining a residual flow rate of fluid, the passage of fluid from the inlet to the outlet takes place by means of leakage of fluid at said valve element in the interception area.

Each one of the above-mentioned aspects of the invention can be considered alone or in combination with any one of the claims or the other aspects described. Further characteristics and advantages will become more apparent from the detailed description of several exemplary, but not exclusive, embodiments, also including a preferred embodiment, of a device and a method for regulating heating systems, and of a heating system, according to the present invention. This description is provided herein below with reference to the attached drawings, which are provided solely for purpose of providing approximate and thus nonlimiting examples, and of which:
- Figure 1 schematically illustrates one possible embodiment of a heating system according to the present invention, comprising a regulating device according to the present invention;
- Figure 2 is an enlargement of a portion of the heating system appearing in Figure 1;
- Figure 3 shows a possible embodiment of a regulating device for regulating heating systems according to the present invention, inserted by way of example inside a case for a heating plant that is part of a possible embodiment of a heating system;
- Figure 4 shows the elements, and particularly the regulating device, contained in the case appearing in Figure 3;
- Figure 5 is a sectional view, along plane V-V, of the elements shown in Figure ;.
- Figure 5A is an enlargement of a detail of the section of the regulating device shown in Figure 5;
- Figure 6 is a top view of the components appearing in Figure 4;
- Figure 7 is a sectional view, along plane VII-VII, of the elements shown in Figure 6, with the valve element of the regulating device in a partially open operating configuration;
- Figure 7A is an enlargement of a detail of the section of the regulating device shown in Figure 7;
- Figure 8 is a sectional view, along plane VII-VII, of the elements shown in Figure 6, with the valve element of the regulating device in the closed configuration;
- Figure 8A is an enlargement of a detail of the section of the regulating device shown in Figure 8;
- Figure 9 shows a possible embodiment of a regulating device for regulating heating systems according to the present invention, inserted by way of example inside a heating plant that is part of a possible embodiment of a heating system;
- Figure 10 shows the regulating device contained in the heating plant appearing in Figure 9;
- Figure 11 is a sectional view, along plane XI-XI, of the regulating device shown in Figure 10;
- Figure 11A is an enlargement of a detail of the section of the regulating device shown in Figure 11.

With reference to the figures cited, a regulating device for regulating heating systems according to the present invention is indicated in its entirety by the reference number 1. In general, the same reference number is used for identical or similar elements, possibly also in the variant embodiments thereof.

The device 1 is intended to be inserted within a heating system, for the purpose of managing the exchanged streams of fluid at different temperatures. In further detail, the device 1 can preferably be used in the context of a portion of a heating system intended for floor installation and configured to operate with low temperature water, but which is also supplied by a high temperature water heating circuit.

In this text, in conformity with the terminology adopted in this sector, the term "low temperature water" is understood as water for heating spaces which is typically at temperatures on the order of about 25-50 degrees Celsius, whereas "high temperature water" is understood as water supplied by a boiler or similar units or circulating in a high temperature system and which is typically at a temperature on the order of about 60-80 degrees Celsius.

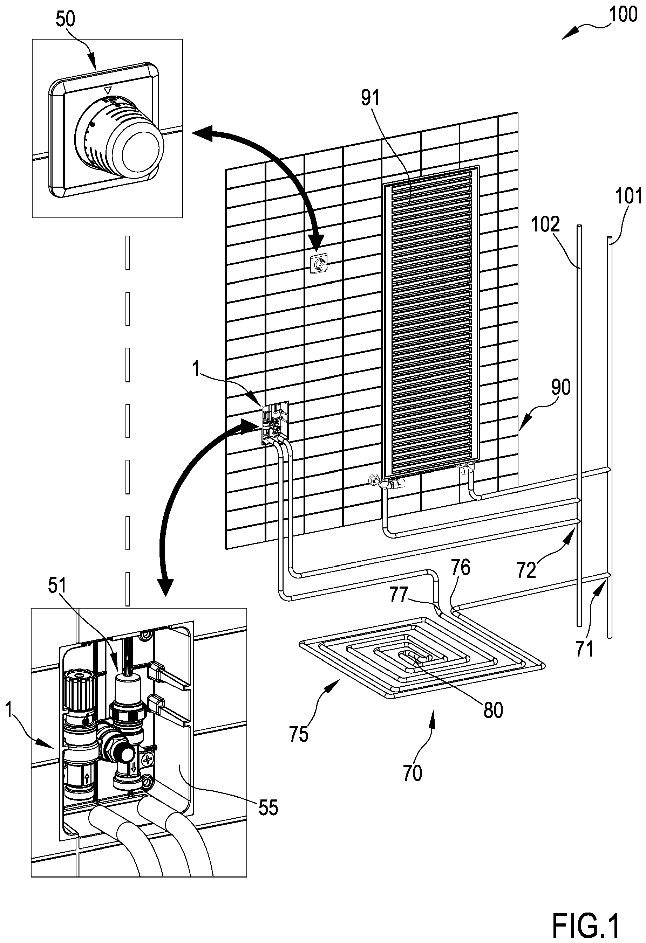

First of all, the regulating device 1 comprises a body 2 provided with at least one inlet 3, an outlet 4 and an interception (or passage) area 5, as shown in Figures 1, 3, 4, 7, 8 and 10.

The inlet 3 is intended to be connected to a line so as to receive a fluid therefrom, whereas the outlet 4 is intended to be connected to a respective line so as to send a fluid thereto;the device is thus configured so as to enable a suitably regulated passage of fluid along a direction from the inlet to the outlet. The interception area 5 is inside the body 2 and it is interposed between the inlet and the outlet so as to connect the inlet and the outlet in such a way that the inlet and the outlet can be selectively set into fluid communication with each other.

Within the scope of the present description, the term "fluid" generally refers to water in a heating or plumbing system.

The inlet and the outlet constitute outward openings in the body of the device and they each have suitable means for connection to lines, pipes or other elements of plumbing systems;such connection means can be of a known type, for example threads, press fittings, etc.

The device 1 further comprises a valve element 10 that is at least partially housed inside the body 2 and that is operatively active in the interception area 5.The valve element 10 is configured to operate in a plurality of operating configurations so as to vary the flow rate of fluid passing from the inlet 3 to the outlet 4, through the interception area 5, as a function of the difference in temperature between the perceived temperature of the fluid at said inlet and a reference temperature at which the valve element is configured.

The plurality of operating configurations comprise at least:
- a maximum aperture configuration, in which there is a maximum flow rate of fluid passing from the inlet 3 to the outlet 4; and
- a closed configuration, corresponding to a state in which the detected temperature of the fluid at the inlet is equal to or higher than the reference temperature.

Essentially, the device 1 is above all a limit temperature controller, in that it is capable of managing the flow rate passing through it, from the inlet to the outlet, proportionally to the difference between the temperature of the fluid at the inlet and a reference temperature;the latter constitutes a "limit" temperature, given that when the incoming fluid reaches this reference temperature, the valve element is brought into a closed configuration.

Additionally, the device 1 according to the present invention is structured so that in said closed configuration there is a residual flow rate of fluid transferred from the inlet to the outlet, and this residual flow rate is strictly greater than zero.

Within the scope of the present invention, the expression "as a function of the difference in temperature" can be understood as "proportionally to the difference in temperature". Moreover, the expression "perceived temperature of the fluid at the inlet" can be understood as the "the temperature of the fluid at the inlet as detected by the valve element".

Preferably, said residual flow rate of fluid transferred from the inlet 3 to the outlet 4 in the closed configuration is comprised between 1 litre/hour and 10 litres/hour. Said residual flow rate of fluid transferred from the inlet to the outlet can be limited to a range comprised between 2 litres/hour and 8 litres/hour, or to a range comprised between 3 litres/hour and 6 litres/hour, or even to a range comprised between 3.5 litres/hour and 5 litres/hour.

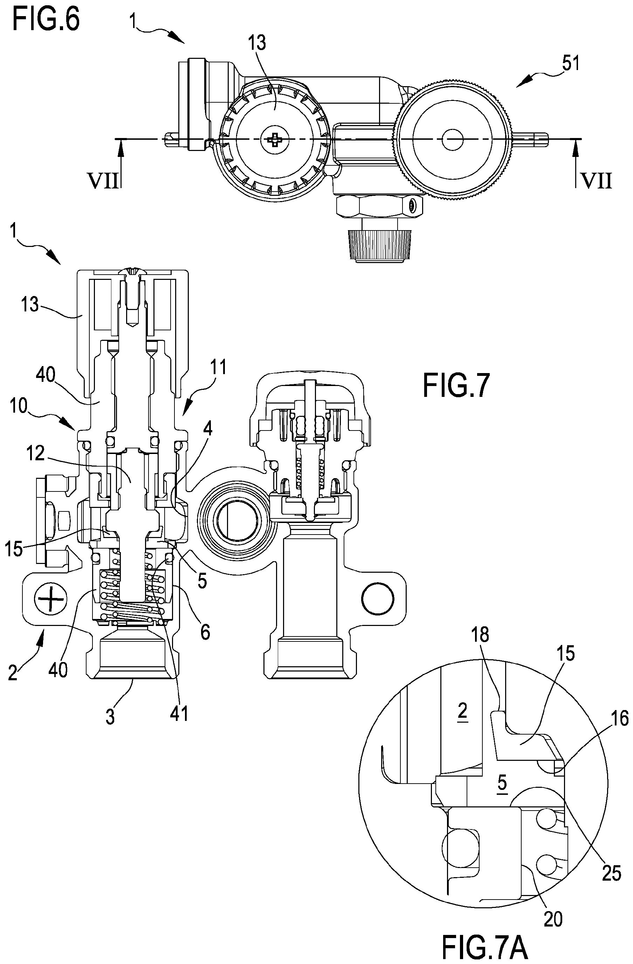

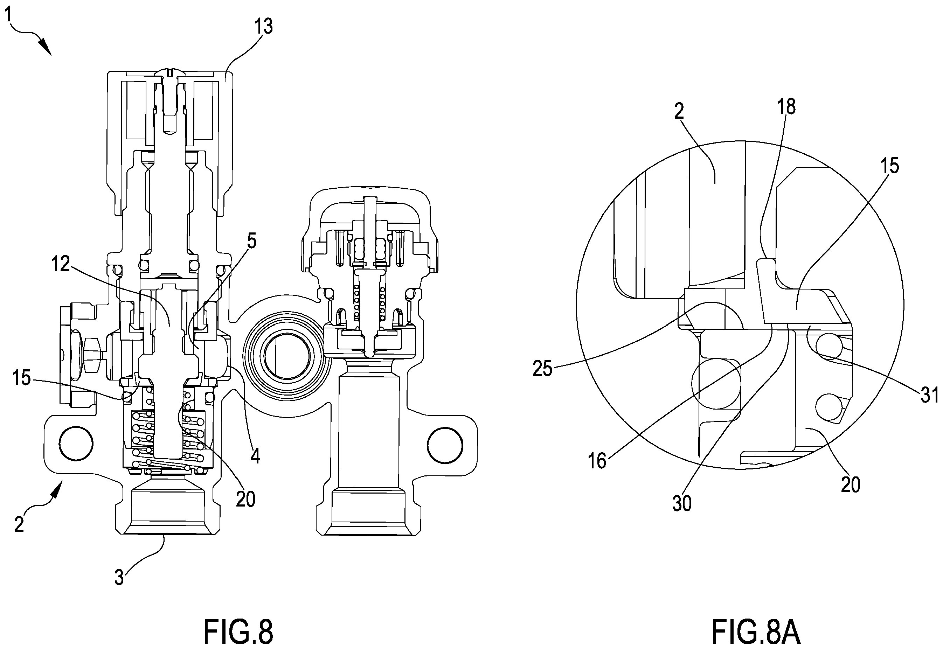

As shown by way of example in Figures 7 and 8, the valve element 10 preferably comprises a thermostatic valve 11 (or thermostatic element) inserted in the body and comprising a movable shutter 15 configured to move closer to and away from a passage section 20 defined in the interception area 5, so as to vary the flow rate of a fluid passing from the inlet 3 to the outlet 4 according to said plurality of operating configurations.

In further detail, the shutter 15 preferably moves closer to the passage section 20 upon a decrease in the difference between the perceived temperature of the fluid at the inlet 3 and the reference temperature, decreasing the flow rate, and it moves away from the passage section 20 upon an increase in the difference between the perceived temperature of the fluid at the inlet 3 and the reference temperature, increasing the flow rate.

According to a possible embodiment, which is explained in detail herein below, in the closed configuration, there is controlled leakage of fluid at the valve element in the interception area;this leakage determines the passage of said residual flow rate of fluid from the inlet to the outlet.

According to the invention, the leakage of fluid takes place between the shutter 15 and the passage section 20 and this leakage determines the passage of said residual flow rate of fluid from the inlet to the outlet.

Within the scope of the present invention, the expression "controlled leakage of fluid" is understood as an intentional leakage of fluid, that is, leakage of a suitable amount of fluid. Essentially, said leakage ensures that the residual flow rate of fluid is transferred in each operating configuration of the valve element, and particularly in the closed configuration.

The thermostatic valve 11 preferably comprises a temperature-sensitive thermostat 12. This thermostat 12 is configured to vary its dimensions as a function of the temperature it perceives. The thermostat can be of a known type, for example a wax-, gas- or liquid-type thermostat. The shutter 15 is preferably associated with or constrained to the thermostat 12.

The thermostat 12 is preferably axially inserted in the body 2, in such a way as to occupy at least partially the interception area 5, and it modifies its own length as a function of the temperature of the fluid at the inlet 3.

In further detail, the thermostat increases in length upon an increase in the perceived temperature, bringing the shutter 15 closer to the passage section 20, and decreases in length upon a decrease in the perceived temperature, bringing the shutter 15 away from the passage section 20.

The valve element 10 preferably comprises members for the selection of said reference temperature, so that when the fluid incoming to the inlet 3 reaches or exceeds this reference temperature, the valve element is brought into the closed configuration.

Preferably, the members for selecting the reference temperature can comprise a knob 13 that is active on the thermostat 12 to vary the axial position thereof inside the body of the device, so as to bring the shutter 15 closer to or away from the passage section, where the approaching movement of the shutter determines a lowering of the reference temperature and the distancing movement of the shutter determines an increase in the reference temperature. In fact, movement of the shutter away from the passage section requires greater thermal expansion in order to reach the closed configuration and therefore a greater increase in the temperature at the inlet. Conversely, movement of the shutter closer to the passage section requires less thermal expansion in order to reach the closed configuration and therefore a lower increase in the temperature at the inlet.

The device 1 thus works in the following manner: It is connected to a line which sends water to the inlet 3 and to an additional line which receives water from the outlet 4, and a reference temperature is also set, owing to the action of the knob for example. The valve element 10 is wet by the water incoming to the inlet 3 and it perceives the temperature thereof. The valve element operates in a given operating configuration according to the difference between the temperature of the water at the inlet and the reference temperature, that is, it allows a higher or lower flow rate of fluid to pass from the inlet 3 to the output 4.

As the temperature at the inlet gradually increases, approaching the set value, the thermostat 12 increases in length. The increase in the length of the thermostat determines the descent of the shutter 15 until it abuts against the passage section, that is, until the closed configuration is reached, and the closed configuration is maintained for temperatures at the inlet equal to or higher than the set reference temperature (which is therefore a "limit" temperature in all respects). In any case, in this configuration, the device 1 of the present invention comprises the passage of a residual flow rate of water, for example by means of leakage between the shutter and the passage section.

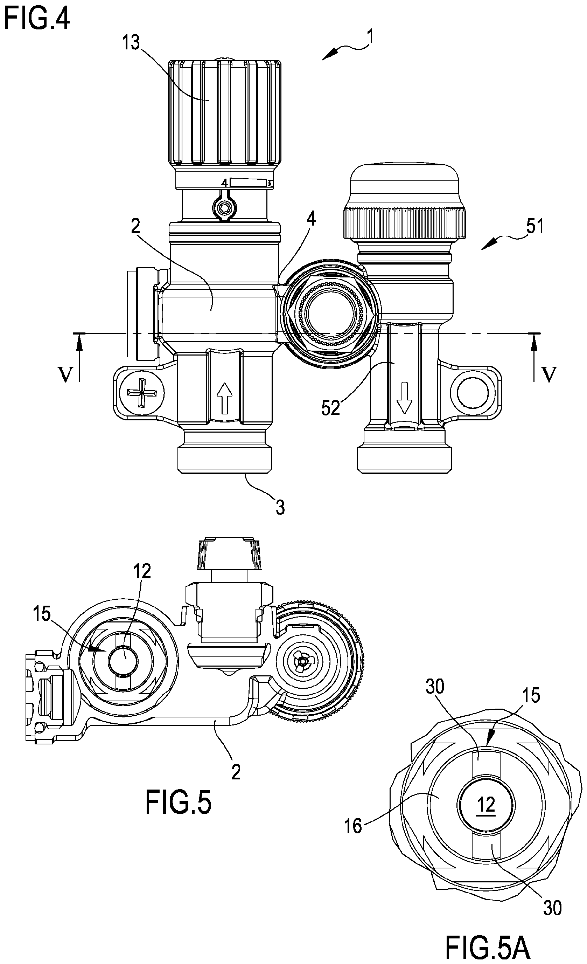

The passage of the "residual flow rate" can be advantageously achieved by means of the example embodiment in Figures 4 to 8, which comprises a structure of the shutter capable of realizing the controlled leakage.

In these figures, the various components of the device 1 are visible: the body 2, the inlet 3, the outlet 4, the interception area 5, the valve element 10, the thermostatic valve 11, the thermostat 12, the knob 13, the shutter 15 and the passage section 20.

The section appearing in Figure 7 shows the device in a partially open configuration. It is possible to note (see the detail in Figure 7A) the axial distance existing between the shutter and the passage section, which enables the passage of a flow rate of water from the inlet to the outlet.

The shutter 15 preferably has a substantially ring (or disc) shape and is positioned around the thermostat 12, preferably coaxially with respect to the longitudinal extension of the thermostat.

The shutter preferably has a lower surface 16 facing the passage section 20 defined in the interception area 5 and preferably having a circular crown shape, and an upper surface 18 opposite the lower surface 16.

As can be seen in Figures 7 and 8, the thermostat 12 is preferably positioned in the interception area 5 so as to pass through the passage section 20, leaving a preferably ring-shaped passage free between the thermostat and the inner walls of the body 2 of the device or of the valve element 10.

According to that which has been described concerning the effect of the temperature of the water at the inlet on the operation of the valve element, the lower surface 16 moves away from the passage section 20 as the thermostat 12 decreases in length (upon the decrease in the perceived temperature), moves closer to the passage section 20 as the thermostat increases in length (upon the increase in the perceived temperature), and moves so as to abut on a perimeter surface 25 of the passage section 20 when the valve element is brought into the closed configuration.

The perimeter surface 25 preferably has a ring shape and it extends in a plane substantially perpendicular to the longitudinal extension of the body of the device and the thermostat, that is, in a plane orthogonal to the direction of expansion and contraction of the thermostat.

Essentially, the perimeter surface 25 which extends around the passage section 20 constitutes a seat for the shutter, a seat on which the lower surface of the shutter abuts, at least partially, when the valve element is in the closed configuration.

The section shown in Figure 5 and the enlargement appearing in Figure 5A show an example embodiment that makes it possible to obtain the above-mentioned controlled leakage, by means of which the residual flow of fluid is transferred from the inlet 3 to the outlet 4 of the device. According to this embodiment, the lower surface 16 has at least one hollow portion 30 recessed from the lower surface (towards the upper surface 18), so that when the shutter is positioned so as to abut on the perimeter surface 25 of the passage section, that is, when the valve element is brought into the closed configuration, between the perimeter surface 25 and the hollow portion 30, a free channel 31 is realized in the passage section 20, through which the passage of said residual flow rate of fluid takes place from the inlet to the outlet of the device. The channel 31 is defined between the lower surface of the shutter and the passage section, although the shutter is actually abutting on the perimeter surface 25.

The lower surface 16 of the shutter 15 can preferably have two hollow portions 30, for example diametrically opposed with respect to the thermostat around which the shutter is fastened;in this case, two channels 31 are realized for the passage of the fluid.

Essentially, the presence of the hollow portion 30 (or of a number of hollow portions) enables a passage of fluid, even if at the same time the resting of the lower surface 16 of the shutter 15 abutting on the passage section 20 is ensured in any case, given that the entire lower surface of the shutter, with the exception of the hollow portion (or of the hollow portions if there is more than one) can abut on the perimeter surface, and thus intercept the passage section.

See Figures 5 and 5A in this regard. These figures show a ring-shaped shutter 15 arranged around the thermostat. Two hollow portions are realized along a diameter of the lower surface of the shutter and they extend from the outside towards the inside of the lower surface, to as far as the thermostat. The two hollow portions represent a removal of shutter material, starting from the lower surface towards the upper surface, that is, starting from the plane of the figures inwards. This results in the creation of the state shown in the section in Figures 8 and 8A, which show the device in the closed configuration. This section has been taken through a central plane of the device (as illustrated in Figure 6) and it thus intercepts the two hollow portions shown in Figures 5 and 5A. Therefore, in Figures 8 and 8A it can be observed that at the hollow portions 30, the lower surface proves to be distanced from the perimeter surface 25 of the passage section 20 and the channels 31 for the passage of said residual flow rate of fluid are thus realized. However, the lower surface portions that are not affected by hollow spaces abut on the perimeter surface 25 of the passage section 20. Therefore, this technical solution makes it possible to realize the controlled leakage of fluid even in the closed configuration.

In the same way, the lower surface of the shutter can have a plurality of hollow portions that are preferably evenly distributed on the lower surface.

The lower surface of the shutter is preferably planar and/or smooth, with the exception of said at least one hollow portion (or of the hollow portions if there is more than one).

Preferably, the depth of said at least one hollow portion, that is, the distance of the recess from the lower surface of the shutter, can be less than 3mm, or less than 2mm, or less than 1mm, or less than 0.5mm or less than 0.2mm.

According to possible embodiments (not illustrated), said leakage can be realized at additional points of the device and particularly at points in the interception area 5.

See Figures 7 and 8 in this regard.The valve element 10 can be constituted by a thermostatic spindle, or a thermostatic cartridge, and comprise a containment structure 40 that houses the thermostatic valve 11, the knob 13 with the means for selecting the reference temperature (i.e., the stem active on the thermostat 12 and the retaining spring), and the thermostat 12 with the shutter 15.The containment structure 40 is inserted in the body 2 of the device, in such a way that the thermostatic valve proves to be correctly positioned inside the body, with the thermostat active in the interception area. One or more gaskets are present between the containment structure 40 and an inner wall 6 of the body 2 in order to enable proper mounting of the thermostatic spindle, or cartridge, in the body of the device. The device preferably comprises a gasket 41 interposed between the outside of the valve element 10 (for example, the structure 40 of said thermostatic spindle) and the inside of the body 2, and located in said interception area between the inlet 3 and the outlet 4.

The leakage of fluid to realize said residual flow rate of fluid can take place between the outside of the valve element 10 and an inner wall of the body 2, and particularly it can take place in the absence of gaskets interposed between these two elements. Alternatively, the leakage can take place at said gasket 41; with this aim and by way of example, the gasket 41 can be undersized so as not to effect perfect sealing between the valve element and the body of the device and therefore enable the passage of the residual flow rate of fluid.

Note that in the embodiment appearing in Figures 7 and 8, the valve element is inserted in the interception area with the containment structure 40 against the inner wall 6 of the body 2 of the device, and the passage section 20, in addition to being inside the body 2 is also inside the containment structure 40.

In an additional possible variant, the controlled leakage can be achieved by preventing the shutter, when it is abutting on the seat constituted by the perimeter surface of the passage section, from effecting complete sealing and by providing instead a seal that is not optimal and that enables a passage of fluid equal to said residual flow rate.

In a possible embodiment (not illustrated), the body of the device comprises a bypass line or passage extending between and connecting the inlet to the outlet and configured to ensure the transfer of said residual flow rate of fluid in each operating configuration of the valve element and particularly in the closed configuration.

Preferably, the bypass line is defined at or in proximity to the interception area.

According to the invention, the bypass line is defined at or in proximity to the passage section. Preferably, the bypass line is defined, within said body, at the thermostatic valve, particularly at the thermostat and/or shutter. Preferably, the bypass line is configured to transfer fluid present immediately upstream of the thermostatic valve towards the outlet, with a flow rate equal to said residual flow rate of fluid.

Preferably, said residual flow rate of fluid, transferred from the inlet to the outlet, is present in each operating configuration of the valve element.

Preferably, the bypass line, which is used for the passage of said residual flow rate, constitutes an alternative embodiment of said controlled leakage, regardless of the point inside the body in which the leakage takes place or the procedure for obtaining the leakage.

The body 2 of the device is preferably made as a single piece or monobloc structure. The body 2 of the device is preferably obtained by means of a single casting process, preferably by casting a metal material, for example brass.

A heating system 100 according to the present invention is described below. In this regard, see Figure 1, which schematically illustrates the system by way of example.

The heating system 100 comprises at least one radiant pipe 70 intended for floor installation and configured to heat a space. The radiant pipe 70 extends between an inlet end 71, which is intended to be fluidly connected with a source of high temperature fluid so as to receive high temperature fluid therefrom, and an outlet end 72, which is intended to be connected with a heat generator so as to admit low temperature fluid therein. Between the inlet end and the outlet end, the radiant pipe 70 comprises a coiled portion 75 configured to transmit radiant heat from the fluid, flowing therein, outwards.

As illustrated in Figure 1, the source of high temperature fluid can be the delivery line of a boiler or a high temperature water circuit 101, and the low temperature return can be a return line 102 to the boiler.

The inlet end 71 is preferably directly connected with the source of high temperature fluid, without the interposition of valves or regulators, that is, it is branched off directly from the high temperature circuit 101.

The device 1 is preferably located downstream of the coiled portion 75 and upstream of the outlet end 72 of the radiant pipe so as to intercept the flow of fluid flowing in the pipe. The inlet 3 of the device 1 receives fluid coming from the coiled portion 75, the device 1 transmits a flow rate for this fluid to the outlet 4 based on the operating configuration of the valve element 10, and the outlet 4 is connected with the outlet end 72 of the radiant pipe 70.

As shown in Figure 1, the heating system 100 is preferably a system for heating spaces and, in addition to the radiant floor pipe 70, it also comprises a high temperature part 90 of the system.ln this case, the high temperature part 90 of the system branches off directly from the high temperature water circuit 101, supplies one or more thermosiphons 91 and then returns directly into the return line 102 to the boiler.

In more general terms, the system can comprise a number of branches and a number of portions, for example each one being intended for a different room inside a building or a residence.

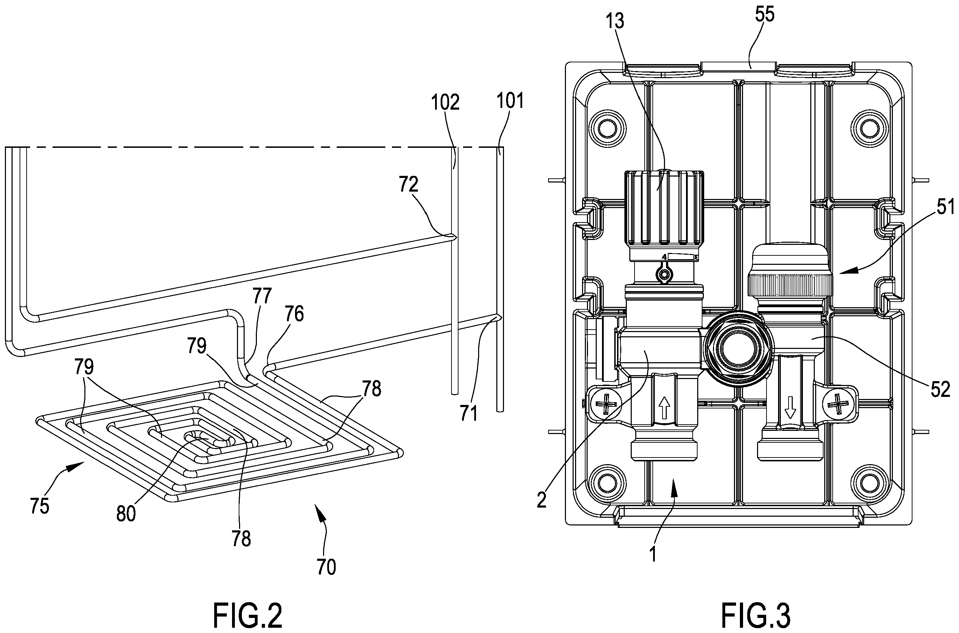

As shown in Figure 1 and in the enlargement appearing in Figure 2, the coiled portion 75, in a plan view, is preferably shaped in the form of a double spiral, so that the beginning 76 and the end 77 of this coiled portion prove to be contiguous with respect to each other, that is, close to each other, and outside of the double spiral itself. According to this configuration, the double spiral comprises a first spiral 78, or outgoing spiral, extending from the beginning 76 of the coiled portion to a central point 80 of the coiled portion, and a second spiral 79, or return spiral, extending from the central point 80 to the end 77 of the coiled portion; the central point connects, and is shared by, the first spiral 78 and the second spiral 79.

The first spiral 78 and the second spiral 79 are preferably arranged, in the double spiral, in such a way that they are interposed or alternated with respect to each other; this produces, from the outside to the inside of the double spiral, an alternation of coils and turns of the first spiral and the second spiral.

This "double-spiral" installation of the floor pipe makes it possible to achieve optimal operation of the system combined with the regulating device 1. In fact, when the system is switched on, with the device 1 located at the end of the radiant pipe 70, the water enters the inlet end 71 at a high temperature, filling the coil 75;this causes the device 1 to pass into the closed configuration and no further water is admitted except said residual flow rate. This is due to the fact that water is an incompressible fluid and it is thus evident that in order to meet the requirements for the fluid-dynamic equilibrium, no further water can be admitted into the coil 75 unless an equal flow rate of water has exited the same coil.

As the radiant floor pipe gradually cools (given that it transmits heat to the space), the temperature drops in the coil 75 and thus water having a temperature lower than the reference temperature at which the valve element has been set reaches the inlet of the device 1. This causes an opening of the device, which makes an amount of (cooled) water leave from the outlet 4, thereby determining the admittance of an equal amount of high temperature water in the inlet end 71 of the radiant pipe.

Generally, when running, the flow in the radiant floor pipe is very slow, but it makes it possible to maintain the desired temperature in the space.

In this context, the double spiral shape taken on by the coil 75 makes it possible to have the maximum temperature turn or coil (which is part of the first spiral 78, the outgoing spiral) outside the coil itself; alongside it, proceeding towards the inside of the coil, there is the minimum temperature turn or coil (that is, the last turn that is part of the second spiral 79, the return spiral). One then proceeds in the same manner towards the central point 80 of the coil, with an alternation of turns of the outgoing spiral at a decreasing temperature and turns of the return spiral at an increasing temperature (given that the sequence is being described from the outside inwards). In this manner, the double spiral shape makes it possible to equilibrate the temperature (decreasing from the outside inwards) present in the outgoing spiral with the temperature (decreasing from the inside outwards) present in the return spiral, and to obtain the most even floor temperature distribution possible.

In one possible embodiment, which is shown in Figures 1 to 8, the heating system 100 further comprises a thermostatic valve 50 for thermostatic control of a space, preferably a thermostatic head, located along the radiant pipe 70 at a point downstream of the regulating device 1.The thermostatic valve 50 for temperature control of a space is configured so as to enable the selection of a desired temperature for the space in which the heating system is installed and therefore to regulate the flow rate of fluid circulating in the radiant pipe 70 as a function of (or proportionally to) the difference between a temperature detected in the space and the desired temperature for the space. Essentially, this embodiment comprises the use of both the device 1 and a thermostatic valve 50.ln fact, if the device 1 is in charge of managing the inflow of water into the radiant pipe 70 when the feed water is at high temperature, ensuring the correct temperature in the pipe and avoiding damage to the flooring, the user typically wants to be able to set and control the actual temperature present in the room in which the radiant pipe operates. In fact, comfort in the room is given by the possibility of managing the perceived room temperature and not by the temperature of the water circulating in the coil 75 (this latter temperature having a technical function related to the heat radiated for heating).

In other words, two independent temperature controls are obtained: one control for the water in the radiant pipe, provided by the device 1, and one control for the space, by means of the thermostatic valve 50.

Figures 1 to 8 show the device 1 combined with a valve 51 that can be thermostatically controlled and with which a thermostatic head 50 can be associated, directly mounted on the valve or in a remote position. In this case, the body 2 of the device 1 and the respective body 52 of the valve 51 that can be thermostatically controlled can be made as a single piece. The device 1 and the valve 51 that can be thermostatically controlled are housed inside a specific case 55 of a type that is known in the field.

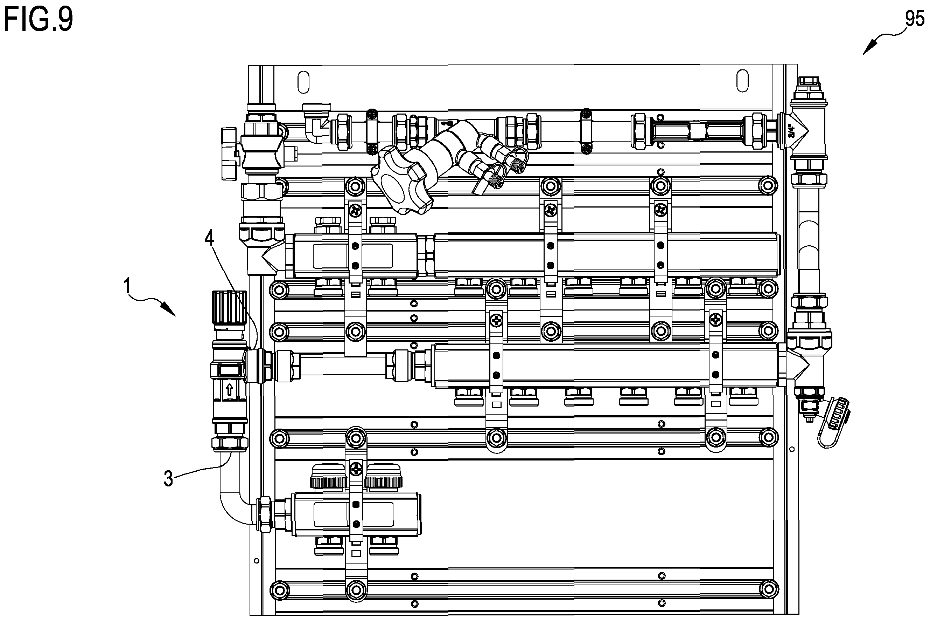

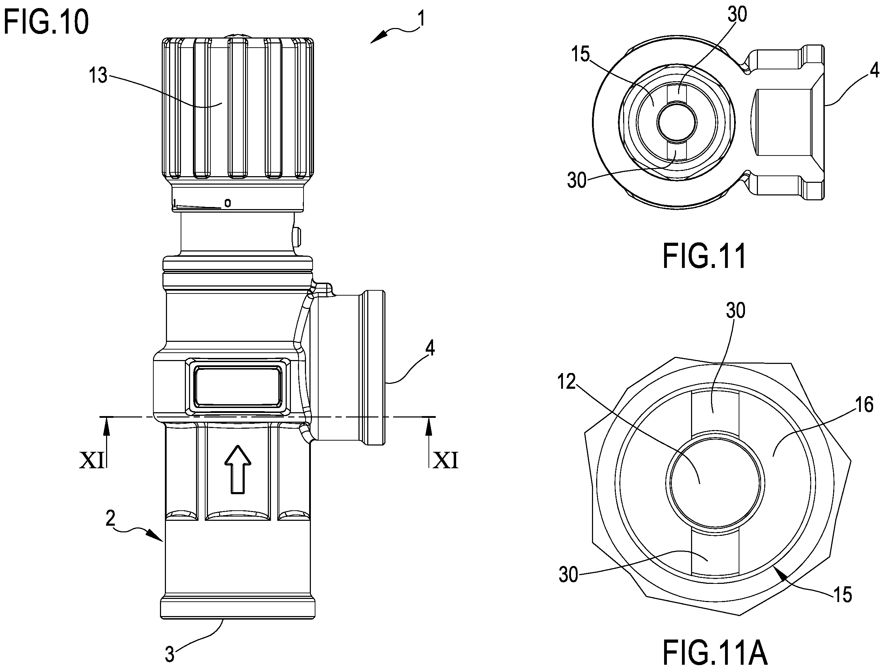

Figure 9 shows a different embodiment which provides for use of the regulating device 1 inside a heating plant 95 that is inserted in a case or cabinet and for example built into a wall compartment, according to procedures that are known in the field. The heating plant comprises numerous elements, including pipes, collectors, valves, mounting brackets, etc. These elements are in charge of managing numerous portions of a heating system, which can be of a mixed type and comprise portions or branches operating at high temperatures (with thermosiphons) as well as portions or branches operating at low temperatures (with floor pipes). Figures 10 and 11 show the structure of the device 1 contained in the heating plant 95.The device is identical to the device shown in Figures 1-8 and as can be seen in the section appearing in Figures 11 and 11A, it has a shutter with hollow portions which makes it possible to realize the leakage owing to which the residual flow rate is transferred from the inlet to the outlet when the device is in the closed configuration.

In general, in the embodiment appearing in Figures 1-8 and in the embodiment appearing in Figures 9-11, the device 1 constituting the object of the present invention operates inside cases or closed boxes, in which an issue arises, as described above and as is known in the field, that is, the problem of the overheating of the various elements, including the regulating device for controlling the limit temperature.

However, the solution underlying the present invention makes it possible to achieve proper operation of the device even under these conditions and this is possible owing to the residual flow rate of fluid, which passes even in the closed configuration. Although it is preferably a low rate, for example 3-5 litres/hour, this residual flow rate is sufficient to "empty" the inner part of the body (that is, the interception area) near the temperature-sensitive valve element even when the latter is closed. Essentially, even with the device being closed a passage of fluid is maintained, enabling the circulation of a small amount of water, rather than having it stagnate at the inlet, exposing it to overheating phenomena typical of the environment found inside cases and heating plants. By avoiding this "stagnation" of overheated water at the inlet of the device 1, "lockout" of the device is prevented; in the prior art "lockout" of a device occurs when the valve element perceives a high temperature (higher than the limit temperature at which it has been set), even if the radiant pipe has cooled. By discharging a low flow rate of water towards the outlet, the device is always wet by water having the actual temperature present in the radiant pipe, based on which the device must command, when necessary, the drawing of new hot water incoming to the radiant pipe.

Note that the residual flow rate maintained by the device even in the closed configuration - for example by means of said leakage, which determines a passage through the device of water leaving the radiant pipe (and as a result the admittance of an equal amount of high temperature water) - is such that it does not affect proper operation of the system. In terms of the regulation of the system for the purpose of heating a space, the regulating device can in any case be considered closed even if the residual flow rate is maintained. This is because the residual flow rate is preferably a low rate, so as not to modify the overall temperature in the floor pipe and not to cause malfunctioning in the system or in the control part;in essence, there is no impact on the operation of the system, but only local benefits related to the operation of the regulating device 1. This is the case even when the heating process carried out by the radiant floor pipe is stopped. In that case, the residual flow rate does not have any concrete effects relating to heating the floor or on the room containing the pipe.

In any case, the presence of a thermostatic valve 50, in combination with the device 1, prevents any undesirable effects due to the passage of the residual flow rate in the closed configuration. This is because even if the residual flow rate can in theory increase the radiant effect, in any case the thermostatic valve takes care of keeping regulation of the temperature desired in the space active.

The method for regulating heating systems, which constitutes an object of the present invention, can be implemented preferably but not exclusively by a device 1 of the type described hereinabove. In this case, the method can substantially coincide with the operating procedure and the installation of a heating system that includes the regulating device 1. This method comprises arranging a radiant pipe, as described above, and connecting a regulating device 1 thereto according to the procedures described hereinabove.

The method then comprises a step of circulating a fluid in said radiant pipe, in which the flow rate of fluid passing from the inlet to the outlet of the regulating device, through the interception area, is a function of the difference in temperature between the perceived temperature of the fluid at the inlet and the reference temperature at which the valve element is configured;it follows that the flow rate passing from the inlet to the outlet of the regulating device and conveyed towards the outlet end of the radiant pipe is equal to the incoming flow rate at the inlet end of the radiant pipe.

The method further comprises that the step of circulating a fluid in said radiant pipe comprises a step of maintaining a residual flow rate, greater than zero, of fluid transferred from the inlet to the outlet of the regulating device when the valve element is in the closed configuration.

In a manner similar to that which has been described above, in the step of maintaining a residual flow rate of fluid, the residual flow rate of fluid is preferably comprised between 2 litres/hour and 8 litres/hour or comprised between 3 litres/hour and 6 litres/hour or comprised between 3.5 litres/hour and 5 litres /hour. The step of maintaining the residual flow rate is the step that makes it possible to distance the water stopped at the inlet of the device 1 before it can overheat and to have new water reach it, from the end of the radiant pipe, so that the valve element detects the correct temperature of the water present precisely at the end of the pipe.

There can be multiple embodiments, as described above, but the step of maintaining the residual flow rate must be carried out in the proper area of the device, that is, in the proximity of the valve element (that is, around or in the proximity of the thermostat and the shutter), where the device perceives the temperature and where in the prior art the "lockout" problem takes place with the device being closed.

The invention thus conceived is susceptible to numerous modifications and variants, all of which falling within the scope of the inventive concept and the components cited may be replaced with other technically equivalent elements. The invention offers important advantages. First of all, the invention makes it possible to overcome at least some of the drawbacks of the prior art.

Moreover, the device of the present invention makes it possible to effectively connect a radiant floor pipe to a high temperature circuit, enabling proper management of the operating temperatures and of the flows inside the pipe. Furthermore, the device of the present invention is capable of operating correctly inside heating plants or in proximity to components of a heating system operating at high temperatures.

The device of the present invention is also characterized by a high degree of versatility and it is capable of adapting to a large number and many different types of heating systems.

Application of the invention is particularly advantageous when one wants to be able to realize a new portion of a system with floor heating, while also using an already existing system that operates at high temperatures, for example because it is a system that uses radiators or thermosiphons.

Furthermore, the device of the present invention is characterized by a high level of operating reliability, by less susceptibility to damage and malfunctioning and it can offer simple and rapid maintenance.

Lastly, the device of the present invention is characterized by a competitive cost and by a simple and rational structure.

## Claims

1. A regulating device (1) for regulating heating systems, comprising:
- a body (2) of the device provided with at least one inlet (3), which is intended to be connected to a line so as to receive a fluid therefrom, an outlet (4), which is intended to be connected to a respective line so as to send a fluid thereto, and an interception area (5) within said body (2) and interposed between, and connecting, said inlet (3) and said outlet (4), in such a way that said inlet and said outlet can be selectively set into fluid communication with each other;
- a valve element (10) that can be at least partially housed inside the body (2) and that is operatively active in said interception area (5), said valve element (10) being configured to operate in a plurality of operating configurations so as to vary the flow rate of fluid passing from said inlet (3) to said outlet (4), through said interception area (5), as a function of the difference in temperature between a perceived temperature of the fluid at said inlet and a reference temperature at which the valve element can be configured;
wherein said plurality of operating configurations comprise at least one maximum aperture configuration, in which there is a maximum flow rate of fluid passing from said inlet to said outlet, and a closed configuration, corresponding to a state in which said detected temperature of the fluid at inlet is equal to or higher than said reference temperature;
wherein in said closed configuration, there is a residual flow rate of fluid transferred from said inlet to said outlet, said residual flow rate being greater than zero,
wherein said valve element (10) comprises a thermostatic valve (11) inserted in said body (2) and comprising a movable shutter (15) configured to move closer to and away from a passage section (20) defined in said interception area (5) so as to vary said flow rate of fluid passing from said inlet (3) to said outlet (4) according to said plurality of operating configurations, wherein said shutter (15) moves closer to the passage section upon a decrease in the difference between the perceived temperature of the fluid at the inlet and said reference temperature, decreasing said flow rate, and it moves away from the passage section upon an increase in the difference between the perceived temperature of the fluid at the inlet and said reference temperature, increasing said flow rate,
the device being **characterized in that** in said closed configuration, there is leakage of fluid between said shutter (15) and said passage section (20), said leakage determining the passage of said residual flow rate of fluid from said inlet to said outlet.

2. The device (1) according to claim 1, wherein said residual flow rate of fluid transferred from said inlet to said outlet in said closed configuration is comprised between 2 litres/hour and 8 litres/hour, or wherein said residual flow rate of fluid transferred from said inlet to said outlet in said closed configuration is comprised between 3 litres/hour and 6 litres /hour, or wherein said residual flow rate of fluid transferred from said inlet to said outlet in said closed configuration is comprised between 3.5 litres/hour and 5 litres/hour.

3. The device (1) according to claim 1 or 2, wherein in said closed configuration, there is controlled leakage of fluid at said valve element (10) in the interception area (5), said leakage determining the passage of said residual flow rate of fluid from said inlet (3) to said outlet (4).

4. The device according to any one of the preceding claims, wherein the valve element (10) comprises members for the selection of said reference temperature, so that when the fluid incoming to said inlet reaches or exceeds this reference temperature, the valve element is brought into said closed configuration.

5. The device (1) according to any one of the preceding claims, wherein said thermostatic valve (11) comprises a temperature-sensitive thermostat (12), said thermostat being configured to vary its dimensions as a function of the temperature it perceives, said shutter (15) being associated with or constrained to said thermostat, and/or wherein the thermostat (12) is axially inserted in said body (2), in such a way as to occupy at least partially said interception area (5), and it is configured so as to modify its own length as a function of the temperature of the fluid at said inlet, as perceived by the thermostat itself, and/or wherein the thermostat increases in length upon an increase in the perceived temperature, bringing said shutter closer to the passage section, and decreases in length upon a decrease in the perceived temperature, bringing said shutter away from the passage section.

6. The device (1) according to the preceding claim, wherein the shutter (15) moves so as to abut on said passage section (20) when the valve element (10) is brought into said closed configuration, and wherein the shutter (15) has a substantially disc or ring shape and is positioned around the thermostat.

7. The device (1) according to claim 5 or 6, wherein the shutter has a lower surface (16) facing said passage section (20) defined in the interception area (5) and preferably having a circular crown shape, and an upper surface (18) opposite said lower surface, and wherein said lower surface (16) moves away from said passage section as the thermostat decreases in length, moves closer to the passage section as the thermostat increases in length, and moves so as to abut on a preferably ring-shaped perimeter surface (25) of said passage section (20) when the valve element is brought into the closed configuration.

8. The device (1) according claim 7, wherein the lower surface (16) has at least one hollow portion (30) recessed from the lower surface, so that when the shutter (15) is positioned so as to abut on the perimeter surface (25) of the passage section (20), between the perimeter surface (25) and said at least one hollow portion (30), a free channel (31) is realized in said passage section (20), through which the passage of said residual flow rate of fluid takes place from the inlet (3) to the outlet (4) of the device.

9. The device (1) according to any one of the preceding claims, wherein the body (2) of the device comprises a bypass line or passage extending between and connecting said inlet to said outlet and configured to ensure the transfer of said residual flow rate of fluid in each operating configuration of the valve element and particularly in said closed configuration, and/or wherein the said bypass line is defined at or near said interception area, and/or wherein said bypass line is defined at or near said passage section, and/or wherein said bypass line is configured to transfer fluid present immediately upstream of said thermostatic valve towards said outlet with a flow rate equal to said residual flow rate of fluid.

10. A heating system (100) comprising:
- at least one radiant pipe (70) intended for floor installation and configured to heat a space, said radiant pipe (70) extending between an inlet end (71), which is intended to be fluidly connected with a source of high temperature fluid so as to receive high temperature fluid therefrom, and an outlet end (72), which is intended to be fluidly connected with a heat generator so as to admit low temperature fluid therein, said radiant pipe (70) comprising, between said inlet end and said outlet end, a coiled portion (75) configured to transmit radiant heat from the fluid, flowing therein, outwards;
- at least one regulating device (1) for regulating heating systems according to any one of the preceding claims, located downstream of said coiled portion (75) and upstream of said outlet end (72) of the radiant pipe so as to intercept the flow of fluid flowing in said pipe, wherein the inlet (3) of the regulating device receives fluid coming from said coiled portion (75), the device (1) transmits a flow rate for this fluid to the outlet (4) based on the operating configuration of the valve element (10), and the outlet (4) of the device is fluidly connected with said outlet end (72) of the radiant pipe.

11. The system (100) according to the preceding claim, comprising a thermostatic head (50) for temperature control of a space, located along said radiant pipe (70) at a point downstream of said regulating device (1), said thermostatic head (50) for temperature control of a space being configured so as to enable the selection of a desired temperature for the space in which the heating system is installed and therefore to regulate the flow rate of fluid circulating in the radiant pipe as a function of the difference between a temperature detected in the space and said desired temperature for the space.

12. The system (100) according to claim 10 or 11, wherein said coiled portion (75), in a plan view, is shaped in the form of a double spiral, so that a beginning (76) and an end (77) of this coiled portion (75) prove to be contiguous with respect to each other and outside of the same double spiral.

13. The system (100) according to claim 12, wherein said double spiral comprises a first spiral (78), or outgoing spiral, extending from the beginning (76) of the coiled portion to a central point (80) of the coiled portion, and a second spiral (79), or return spiral, extending from said central point (80) to the end (77) of the coiled portion, said central point (80) connecting, and being shared by, the first spiral and the second spiral, and wherein said first spiral (78) and said second spiral (79) are arranged, in the double spiral, in such a way that they are intercalated or alternated with respect to each other, so as to realize, from the outside to the inside of the double spiral, an alternation of coils and turns of the first spiral and the second spiral.

14. A method for regulating heating systems (100), comprising the steps of:
- arranging at least one radiant pipe (70) intended for floor installation and configured to heat a space, said radiant pipe (70) extending between an inlet end (71), which is intended to be fluidly connected with a source of high temperature fluid so as to receive high temperature fluid therefrom, and an outlet end (72), which is intended to be fluidly connected with a heat generator so as to admit low temperature fluid therein, said radiant pipe (70) comprising, between said inlet end and said outlet end, a coiled portion (75) configured to transmit radiant heat from the fluid, flowing therein, outwards;
- arranging at least one regulating device (1) for heating systems according to any one of claims 1 to 9, located downstream of said coiled portion (75) and upstream of said outlet end (72) of the radiant pipe (70) so as to intercept the flow of fluid flowing in said radiant pipe, wherein the inlet (3) of the regulating device receives fluid coming from said coiled portion (75), and the device (1) transmits a flow rate for this fluid to the outlet (4) of the device based on the operating configuration of the valve element (10) of the device, and the outlet (4) of the device (1) is fluidly connected with said outlet end (72) of the radiant pipe (70);
- circulating a fluid in said radiant pipe (70), in which the flow rate of fluid passing from the inlet (3) to the outlet (4) of the device (1), through said interception area (5), is a function of the difference in temperature between a perceived temperature of the fluid at said inlet and a reference temperature at which the valve element is configured, and in which the flow rate passing from the inlet (3) to the outlet (4) of the device (1) and conveyed towards said outlet end (72) of the radiant pipe (70) is equal to the incoming flow rate at said inlet end (71) of the radiant pipe (70), said step of circulating a fluid in said radiant pipe (70) comprising a step of maintaining a residual flow rate, greater than zero, of fluid transferred from the inlet (3) to the outlet (4) of the device (1), when the valve element (10) is found in said closed configuration.

15. The method according to the preceding claim, wherein, in said step of maintaining a residual flow rate of fluid, the residual flow rate of fluid is comprised between 2 litres/hour and 8 litres/hour or comprised between 3 litres/hour and 6 litres/hour or comprised between 3.5 litres/hour and 5 litres/hour.

## Patentansprüche

1. Regelungsvorrichtung (1) zur Regelung von Heizsystemen, umfassend:
- einen Körper (2) der Vorrichtung, welcher bereitgestellt ist mit wenigstens einem Einlass (3), welcher dafür vorgesehen ist, mit einer Leitung verbunden zu sein, um ein Fluid davon zu empfangen, einem Auslass (4), welcher dafür vorgesehen ist, mit einer jeweiligen Leitung verbunden zu sein, um ein Fluid dahin zu senden, und einem Unterbrechungsbereich (5) innerhalb des Körpers (2), welcher den Einlass (3) und den Auslass (4) verbindet und dazwischen eingefügt ist, in einer derartigen Weise, dass der Einlass und der Auslass selektiv in eine Fluidverbindung miteinander gesetzt werden können;
- ein Ventilelement (10), welches wenigstens teilweise innerhalb des Körpers (2) aufgenommen ist und welches operativ in dem Unterbrechungsbereich (5) wirkt, wobei das Ventilelement (10) dazu eingerichtet ist, in einer Mehrzahl von Betriebskonfigurationen zu arbeiten, um die Strömungsrate von Fluid, welches von dem Einlass (3) zu dem Auslass (4) strömt, durch den Unterbrechungsbereich (5) als eine Funktion der Temperaturdifferenz zwischen einer an dem Einlass wahrgenommenen Temperatur des Fluids und einer Referenztemperatur zu variieren, mit welcher das Ventilelement eingerichtet sein kann;
wobei die Mehrzahl von Betriebskonfigurationen wenigstens eine Konfiguration einer maximalen Öffnung, in welcher eine maximale Strömungsrate von Fluid vorliegt, welches von dem Einlass zu dem Auslass strömt, und eine geschlossene Konfiguration umfasst, welche einem Zustand entspricht, in welchem die an dem Einlass erfasste Temperatur des Fluids gleich oder höher als die Referenztemperatur ist;
wobei in der geschlossenen Konfiguration eine restliche Strömungsrate von Fluid vorliegt, welches von dem Einlass zu dem Auslass überführt wird, wobei die restliche Strömungsrate größer als Null ist, wobei das Ventilelement (10) ein Thermostatventil (11) umfasst, welches in den Körper (2) eingesetzt ist und einen beweglichen Verschluss (15) umfasst, welcher dazu eingerichtet ist, sich näher zu und weg von einem Durchlassabschnitt (20) zu bewegen, welcher in dem Unterbrechungsbereich (5) definiert ist, um die Strömungsrate von Fluid, welches von dem Einlass (3) zu dem Auslass (4) strömt, gemäß der Mehrzahl von Betriebskonfigurationen zu variieren, wobei sich der Verschluss (15) auf eine Verringerung der Differenz zwischen der an dem Einlass wahrgenommenen Temperatur des Fluids und der Referenztemperatur hin näher zu dem Durchlassabschnitt bewegt, was die Strömungsrate verringert, und er sich auf eine Erhöhung der Differenz zwischen der an dem Einlass wahrgenommenen Temperatur des Fluids und der Referenztemperatur hin weg von dem Durchlassabschnitt bewegt, was die Strömungsrate erhöht,
wobei die Vorrichtung **dadurch gekennzeichnet ist, dass** in der geschlossenen Konfiguration eine Leckage von Fluid zwischen dem Verschluss (15) und dem Durchlassabschnitt (20) vorliegt, wobei die Leckage den Durchlass der restlichen Strömungsrate von Fluid von dem Einlass zu dem Auslass bestimmt.

2. Vorrichtung (1) nach Anspruch 1, wobei die restliche Strömungsrate von Fluid, welches von dem Einlass zu dem Auslass überführt wird, in der geschlossenen Konfiguration zwischen 2 Litern pro Stunde und 8 Litern pro Stunde umfasst ist oder wobei die restliche Strömungsrate von Fluid, welches von dem Einlass zu dem Auslass überführt wird, in der geschlossenen Konfiguration zwischen 3 Litern pro Stunde und 6 Litern pro Stunde umfasst ist oder wobei die restliche Strömungsrate von Fluid, welches von dem Einlass zu dem Auslass überführt wird, in der geschlossenen Konfiguration zwischen 3,5 Litern pro Stunde und 5 Litern pro Stunde umfasst ist.

3. Vorrichtung (1) nach Anspruch 1 oder 2, wobei in der geschlossenen Konfiguration in dem Unterbrechungsbereich (5) eine kontrollierte Leckage von Fluid an dem Ventilelement (10) vorliegt, wobei die Leckage den Durchlass der restlichen Strömungsrate von Fluid von dem Einlass (3) zu dem Auslass (4) bestimmt.

4. Vorrichtung nach einem der vorhergehenden Ansprüche, wobei das Ventilelement (10) Elemente für die Auswahl der Referenztemperatur umfasst, so dass, wenn das in den Einlass einströmende Fluid diese Referenztemperatur erreicht oder überschreitet, das Ventilelement in die geschlossene Konfiguration gebracht wird.

5. Vorrichtung (1) nach einem der vorhergehenden Ansprüche, wobei das Thermostatventil (11) einen temperaturempfindlichen Thermostat (12) umfasst, wobei der Thermostat dazu eingerichtet ist, seine Dimensionen als eine Funktion der Temperatur zu variieren, welche er wahrnimmt, wobei der Verschluss (15) dem Thermostat zugeordnet oder daran gehalten ist und/oder wobei der Thermostat (12) axial in den Körper (2) eingesetzt ist, in einer derartigen Weise, dass er wenigstens teilweise den Unterbrechungsbereich (5) besetzt, und er dazu eingerichtet ist, seine eigene Länge als eine Funktion der Temperatur des Fluids an dem Einlass zu modifizieren, wie sie durch den Thermostat selbst wahrgenommen wird, und/oder wobei sich auf eine Erhöhung der wahrgenommenen Temperatur hin die Länge des Thermostats erhöht, was den Verschluss näher zu dem Durchlassabschnitt bringt, und sich auf eine Verringerung der wahrgenommenen Temperatur hin die Länge des Thermostats verringert, was den Verschluss weg von dem Durchlassabschnitt bringt.

6. Vorrichtung (1) nach dem vorhergehenden Anspruch, wobei sich der Verschluss (15) derart bewegt, dass er an dem Durchlassabschnitt (20) anliegt, wenn das Ventilelement (10) in die geschlossene Konfiguration gebracht ist, und wobei der Verschluss (15) eine im Wesentlichen scheibenförmige oder ringförmige Form aufweist und um den Thermostat herum positioniert ist.

7. Vorrichtung (1) nach Anspruch 5 oder 6, wobei der Verschluss eine dem Durchlassabschnitt (20) zugewandte untere Fläche (16), welche in dem Unterbrechungsbereich (5) definiert ist und vorzugsweise eine kreisförmige Kronenform aufweist, und eine der unteren Fläche entgegengesetzte obere Fläche (18) aufweist und wobei sich die untere Fläche (16) weg von dem Durchlassabschnitt bewegt, wenn sich die Länge des Thermostats verringert, sich näher zu dem Durchlassabschnitt bewegt, wenn sich die Länge des Thermostats erhöht, und sich derart bewegt, dass sie an einer vorzugsweise ringförmigen Umfangsfläche (25) des Durchlassabschnitts (20) anliegt, wenn das Ventilelement in die geschlossene Konfiguration gebracht ist.

8. Vorrichtung (1) nach Anspruch 7, wobei die untere Fläche (16) wenigstens einen hohlen Abschnitt (30) aufweist, welcher von der unteren Fläche ausgespart ist, so dass, wenn der Verschluss (15) derart positioniert ist, dass er an der Umfangsfläche (25) des Durchlassabschnitts (20) anliegt, zwischen der Umfangsfläche (25) und dem wenigstens einen hohlen Abschnitt (30) ein freier Kanal (31) in dem Durchlassabschnitt (20) realisiert ist, durch welchen der Durchlass der restlichen Strömungsrate von Fluid von dem Einlass (3) zu dem Auslass (4) der Vorrichtung stattfindet.

9. Vorrichtung (1) nach einem der vorhergehenden Ansprüche, wobei der Körper (2) der Vorrichtung eine Bypassleitung oder einen Durchlass umfasst, welche/welcher den Einlass mit dem Auslass verbindet und sich dazwischen erstreckt und dazu eingerichtet ist, die Überführung der restlichen Strömungsrate von Fluid in jeder Betriebskonfiguration des Ventilelements und insbesondere in der geschlossenen Konfiguration sicherzustellen, und/oder wobei die Bypassleitung an oder nahe an dem Unterbrechungsbereich definiert ist und/oder wobei die Bypassleitung an oder nahe an dem Durchlassabschnitt definiert ist und/oder wobei die Bypassleitung dazu eingerichtet ist, unmittelbar stromaufwärts des Thermostatventils vorhandenes Fluid mit einer Strömungsrate in Richtung des Auslasses zu überführen, welche gleich der restlichen Strömungsrate von Fluid ist.

10. Heizsystem (100), umfassend:
- wenigstens ein Strahlungsrohr (70), welches für eine Bodeninstallation vorgesehen ist und dazu eingerichtet ist, einen Raum zu heizen, wobei sich das Strahlungsrohr (70) zwischen einem Einlassende (71), welches dafür vorgesehen ist, fluidisch mit einer Quelle eines Fluids mit einer hohen Temperatur verbunden zu sein, um davon ein Fluid mit einer hohen Temperatur zu empfangen, und einem Auslassende (72) erstreckt, welches dafür vorgesehen ist, fluidisch mit einem Wärmeerzeuger verbunden zu sein, um darin ein Fluid mit einer niedrigen Temperatur aufzunehmen, wobei das Strahlungsrohr (70) zwischen dem Einlassende und dem Auslassende einen gewickelten Abschnitt (75) umfasst, welcher dazu eingerichtet ist, Strahlungswärme von dem darin strömenden Fluid nach außen zu übertragen;
- wenigstens eine Regelungsvorrichtung (1) zur Regelung von Heizsystemen nach einem der vorhergehenden Ansprüche, welche derart stromabwärts des gewickelten Abschnitts (75) und stromaufwärts des Auslassendes (72) des Strahlungsrohrs angeordnet ist, dass sie die Strömung von Fluid unterbricht, welches in dem Rohr strömt, wobei der Einlass (3) der Regelungsvorrichtung Fluid empfängt, welches von dem gewickelten Abschnitt (75) kommt, die Vorrichtung (1) eine Strömungsrate für dieses Fluid basierend auf der Betriebskonfiguration des Ventilelements (10) zu dem Auslass (4) überträgt und der Auslass (4) fluidisch mit dem Auslassende (72) des Strahlungsrohrs verbunden ist.

11. System (100) nach dem vorhergehenden Anspruch, umfassend einen Thermostatkopf (50) für eine Temperatursteuerung eines Raums, welcher an einer Stelle stromabwärts der Regelungsvorrichtung (1) entlang des Strahlungsrohrs (70) angeordnet ist, wobei der Thermostatkopf (50) für eine Temperatursteuerung eines Raums dazu eingerichtet ist, die Auswahl einer gewünschten Temperatur für den Raum zu ermöglichen, in welchem das Heizsystem installiert ist, und daher die Strömungsrate von Fluid, welches in dem Strahlungsrohr zirkuliert, als eine Funktion der Differenz zwischen einer in dem Raum erfassten Temperatur und der für den Raum gewünschten Temperatur zu regulieren.

12. System (100) nach Anspruch 10 oder 11, wobei der gewickelte Abschnitt (75) in einer Draufsicht in der Form einer Doppelspirale geformt ist, so dass sich ein Anfang (76) und ein Ende (77) dieses gewickelten Abschnitts (75) in Bezug zueinander und außerhalb der gleichen Doppelspirale als zusammenhängend erweisen.

13. System (100) nach Anspruch 12, wobei die Doppelspirale eine erste Spirale (78), oder ausgehende Spirale, welche sich von dem Anfang (76) des gewickelten Abschnitts zu einer zentralen Stelle (80) des gewickelten Abschnitts erstreckt, und eine zweite Spirale (79), oder Rückführungsspirale, umfasst, welche sich von der zentralen Stelle (80) zu dem Ende (77) des gewickelten Abschnitts erstreckt, wobei die zentrale Stelle (80) die erste Spirale und die zweite Spirale verbindet, und davon geteilt wird, und wobei die erste Spirale (78) und die zweite Spirale (79) in einer derartigen Weise in der Doppelspirale angeordnet sind, dass sie in Bezug zueinander zwischengeschaltet oder alternierend sind, um von dem Äußeren zu dem Inneren der Doppelspirale eine Alternation von Wicklungen und Windungen der ersten Spirale und der zweiten Spirale zu realisieren.

14. Verfahren zur Regelung von Heizsystemen (100), umfassend die folgenden Schritte:
- Anordnen wenigstens eines Strahlungsrohrs (70), welches für eine Bodeninstallation vorgesehen ist und dazu eingerichtet ist, einen Raum zu heizen, wobei sich das Strahlungsrohr (70) zwischen einem Einlassende (71), welches dafür vorgesehen ist, fluidisch mit einer Quelle eines Fluids mit einer hohen Temperatur verbunden zu sein, um davon ein Fluid mit einer hohen Temperatur zu empfangen, und einem Auslassende (72) erstreckt, welches dafür vorgesehen ist, fluidisch mit einem Wärmeerzeuger verbunden zu sein, um darin ein Fluid mit einer niedrigen Temperatur aufzunehmen, wobei das Strahlungsrohr (70) zwischen dem Einlassende und dem Auslassende einen gewickelten Abschnitt (75) umfasst, welcher dazu eingerichtet ist, Strahlungswärme von dem darin strömenden Fluid nach außen zu übertragen;
- Anordnen wenigstens einer Regelungsvorrichtung (1) für Heizsysteme nach einem der Ansprüche 1 bis 9, welche derart stromabwärts des gewickelten Abschnitts (75) und stromaufwärts des Auslassendes (72) des Strahlungsrohrs (70) angeordnet ist, dass sie die Strömung von Fluid unterbricht, welches in dem Strahlungsrohr strömt, wobei der Einlass (3) der Regelungsvorrichtung Fluid empfängt, welches von dem gewickelten Abschnitt (75) kommt, und die Vorrichtung (1) eine Strömungsrate für dieses Fluid basierend auf der Betriebskonfiguration des Ventilelements (10) der Vorrichtung zu dem Auslass (4) überträgt und der Auslass (4) der Vorrichtung (1) fluidisch mit dem Auslassende (72) des Strahlungsrohrs (70) verbunden ist.
- Zirkulieren eines Fluids in dem Strahlungsrohr (70), in welchem die Strömungsrate von Fluid, welches von dem Einlass (3) zu dem Auslass (4) der Vorrichtung (1) strömt, durch den Unterbrechungsbereich (5) eine Funktion der Temperaturdifferenz zwischen einer an dem Einlass wahrgenommenen Temperatur des Fluids und einer Referenztemperatur ist, mit welcher das Ventilelement eingerichtet ist, und in welchem die Strömungsrate, welche von dem Einlass (3) zu dem Auslass (4) der Vorrichtung (1) strömt und in Richtung des Auslassendes (72) des Strahlungsrohrs (70) befördert wird, gleich der an dem Einlassende (71) des Strahlungsrohrs (70) hereinkommenden Strömungsrate ist,
wobei der Schritt des Zirkulierens eines Fluids in dem Strahlungsrohr (70) einen Schritt eines Beibehaltens einer restlichen Strömungsrate, welche größer als Null ist, von Fluid umfasst, welches von dem Einlass (3) zu dem Auslass (4) der Vorrichtung (1) überführt wird, wenn sich das Ventilelement (10) in der geschlossenen Konfiguration befindet.

15. Verfahren nach dem vorhergehenden Anspruch, wobei in dem Schritt des Beibehaltens einer restlichen Strömungsrate von Fluid die restliche Strömungsrate von Fluid zwischen 2 Litern pro Stunde und 8 Litern pro Stunde umfasst ist oder zwischen 3 Litern pro Stunde und 6 Litern pro Stunde umfasst ist oder zwischen 3,5 Litern pro Stunde und 5 Litern pro Stunde umfasst ist.

## Revendications

1. Dispositif de régulation (1) destiné à réguler des systèmes de chauffage, comprenant :
- un corps (2) du dispositif pourvu d'au moins un orifice d'entrée (3), qui est prévu pour être raccordé à une conduite afin de recevoir un liquide de celle-ci, un orifice de sortie (4), qui est prévu pour être raccordé à une conduite respective afin d'envoyer un liquide à celle-ci, et une zone d'interception (5) à l'intérieur dudit corps (2) et interposée entre, et raccordant, ledit orifice d'entrée (3) et ledit orifice de sortie (4), d'une manière telle que ledit orifice d'entrée et ledit orifice de sortie peuvent être sélectivement placés en communication fluidique l'un avec l'autre ;
- un élément vanne (10) qui peut être au moins partiellement logé à l'intérieur du corps (2) et qui est fonctionnellement actif dans ladite zone d'interception (5), ledit élément vanne (10) étant configuré pour fonctionner dans une pluralité de configurations de fonctionnement afin de faire varier le débit du liquide passant depuis ledit orifice d'entrée (3) vers ledit orifice de sortie (4), à travers ladite zone d'interception (5), comme une fonction de la différence de température entre une température perçue du liquide au niveau dudit orifice d'entrée et une température de référence à laquelle l'élément vanne peut être configuré ;
ladite pluralité de configurations de fonctionnement comprenant au moins une configuration d'ouverture maximale, dans laquelle il existe un débit maximal de liquide passant depuis ledit orifice d'entrée vers ledit orifice de sortie, et une configuration fermée, correspondant à un état dans lequel ladite température détectée du liquide au niveau de l'orifice d'entrée est supérieure ou égale à ladite température de référence ;
dans ladite configuration fermée, il existe un débit résiduel de liquide transféré depuis ledit orifice d'entrée vers ledit orifice de sortie, ledit débit résiduel étant supérieur à zéro,
ledit élément vanne (10) comprenant une vanne thermostatique (11) insérée dans ledit corps (2) et comprenant un obturateur (15) mobile configuré pour se déplacer vers et loin d'une section de passage (20) définie dans ladite zone d'interception (5) afin de faire varier ledit débit du liquide passant depuis ledit orifice d'entrée (3) vers ledit orifice de sortie (4) en fonction de ladite pluralité de configurations de fonctionnement, ledit obturateur (15) se déplaçant vers la section de passage lors d'une baisse de différence entre la température perçue du liquide au niveau de l'orifice d'entrée et ladite température de référence, réduisant ledit débit, et se déplaçant loin de la section de passage lors d'une augmentation de la différence entre la température perçue du liquide au niveau de l'orifice d'entrée et ladite température de référence, accroissant ledit débit,
le dispositif étant **caractérisé en ce que** dans ladite configuration fermée, il existe une fuite de liquide entre ledit obturateur (15) et ladite section de passage (20), ladite fuite déterminant le passage dudit débit résiduel de liquide depuis ledit orifice d'entrée vers ledit orifice de sortie.

2. Dispositif (1) selon la revendication 1, ledit débit résiduel de liquide transféré depuis ledit orifice d'entrée vers ledit orifice de sortie dans ladite configuration fermée étant compris entre 2 litres/heure et 8 litres/heure, ou ledit débit résiduel de liquide transféré depuis ledit orifice d'entrée vers ledit orifice de sortie dans ladite configuration fermée étant compris entre 3 litres/heure et 6 litres/heure, ou ledit débit résiduel de liquide transféré depuis ledit orifice d'entrée vers ledit orifice de sortie dans ladite configuration fermée étant compris entre 3,5 litres/heure et 5 litres/heure.

3. Dispositif (1) selon la revendication 1 ou 2, dans ladite configuration fermée, il existe une fuite contrôlée de liquide au niveau dudit élément vanne (10) dans la zone d'interception (5), ladite fuite déterminant le passage dudit débit résiduel de liquide depuis ledit orifice d'entrée (3) vers ledit orifice de sortie (4).

4. Dispositif selon l'une quelconque des revendications précédentes, l'élément vanne (10) comprenant des éléments pour la sélection de ladite température de référence, de sorte que lorsque le liquide entrant vers ledit orifice d'entrée atteint ou excède cette température de référence, l'élément vanne est porté dans ladite configuration fermée.

5. Dispositif (1) selon l'une quelconque des revendications précédentes, ladite vanne thermostatique (11) comprenant un thermostat (12) sensible à la température, ledit thermostat étant configuré pour faire varier ses dimensions comme une fonction de la température qu'il perçoit, ledit obturateur (15) étant associé, ou contraint, audit thermostat, et/ou le thermostat (12) étant axialement inséré dans ledit corps (2), d'une manière telle à occuper au moins partiellement ladite zone d'interception (5), et il est configuré afin de modifier sa propre longueur comme une fonction de la température du liquide au niveau dudit orifice d'entrée, telle que perçue par le thermostat lui-même, et/ou le thermostat augmente de longueur lors d'une augmentation dans la température perçue, rapprochant ledit obturateur de la section de passage, et diminuant de longueur lors d'une baisse dans la température perçue, éloignant ledit obturateur de la section de passage.

6. Dispositif (1) selon la revendication précédente, l'obturateur (15) se déplaçant afin de venir en butée sur ladite section de passage (20) lorsque l'élément vanne (10) est porté dans ladite configuration fermée, et l'obturateur (15) ayant une forme sensiblement de disque ou d'anneau et étant positionné autour du thermostat.

7. Dispositif (1) selon la revendication 5 ou 6, l'obturateur ayant une surface inférieure (16) faisant face à ladite section de passage (20) définie dans la zone d'interception (5) et ayant préférablement une forme de couronne circulaire, et une surface supérieure (18) opposée à ladite surface inférieure, et ladite surface inférieure (16) s'éloignant de ladite section de passage lorsque le thermostat diminue de longueur, se rapprochant de la section de passage lorsque le thermostat augmente de longueur, et se déplaçant afin de venir en butée sur une surface de périmètre (25) préférablement en forme d'anneau de ladite section de passage (20) lorsque l'élément vanne est porté en configuration fermée.

8. Dispositif (1) selon la revendication 7, la surface inférieure (16) ayant au moins une portion creuse (30) renfoncée depuis la surface inférieure, de sorte que lorsque l'obturateur (15) est positionné afin de venir en butée sur la surface de périmètre (25) de la section de passage (20), entre la surface de périmètre (25) et ladite au moins une portion creuse (30), un canal libre (31) est réalisé dans ladite section de passage (20), à travers lequel le passage dudit débit résiduel de liquide a lieu depuis l'orifice d'entrée (3) vers l'orifice de sortie (4) du dispositif.

9. Dispositif (1) selon l'une quelconque des revendications précédentes, le corps (2) du dispositif comprenant une conduite de contournement ou de passage s'étendant entre et raccordant ledit orifice d'entrée audit orifice de sortie et configuré pour assurer le transfert dudit débit résiduel de liquide dans chaque configuration de fonctionnement de l'élément vanne et particulièrement dans ladite configuration fermée, et/ou ladite conduite de contournement étant définie au niveau ou près de ladite zone d'interception, et/ou ladite conduite de contournement étant définie au niveau ou près de ladite section de passage, et/ou ladite conduite de contournement étant configurée pour transférer le liquide présent immédiatement en amont de ladite vanne thermostatique vers ledit orifice de sortie avec un débit égal audit débit résiduel de liquide.

10. Système de chauffage (100) comprenant :
- au moins une conduite radiante (70) prévue pour l'installation dans un sol et configurée pour chauffer un espace, ladite conduite radiante (70) s'étendant entre une extrémité d'orifice d'entrée (71), qui est destinée à être fluidiquement raccordée à une source de liquide à haute température afin de recevoir le liquide à haute température de celle-ci, et une extrémité d'orifice de sortie (72), qui est destinée à être fluidiquement raccordée à un générateur de chaleur afin d'admettre à l'intérieur du liquide à basse température, ladite conduite radiante (70) comprenant, entre ladite extrémité d'orifice d'entrée et ladite extrémité d'orifice de sortie, une portion spiralée (75) configurée pour transmettre la chaleur radiante du liquide, s'écoulant à l'intérieur, vers l'extérieur ;
- au moins un dispositif de régulation (1) pour réguler des systèmes de chauffage selon l'une quelconque des revendications précédentes, localisé en aval de ladite portion spiralée (75) et en amont de ladite extrémité d'orifice de sortie (72) de la conduite radiante afin d'intercepter l'écoulement du liquide s'écoulant dans ladite conduite, l'orifice d'entrée (3) du dispositif de régulation recevant le liquide provenant de ladite portion spiralée (75), le dispositif (1) transmettant un débit pour ce liquide à l'orifice de sortie (4) sur la base de la configuration de fonctionnement de l'élément vanne (10), et l'orifice de sortie (4) du dispositif étant raccordé fluidiquement à ladite extrémité d'orifice de sortie (72) de la conduite radiante.

11. Système (100) selon la revendication précédente, comprenant une tête thermostatique (50) pour la régulation de température d'un espace, localisée conjointement à ladite conduite radiante (70) au niveau d'un point en aval dudit dispositif de régulation (1), ladite tête thermostatique (50) pour la régulation de température d'un espace étant configurée afin de permettre la sélection d'une température souhaitée pour l'espace dans lequel le système de chauffage est installé et par conséquent pour réguler le débit du liquide circulant dans la conduite radiante comme une fonction de la différence entre une température détectée dans l'espace et ladite température souhaitée pour l'espace.

12. Système (100) selon la revendication 10 ou 11, ladite portion spiralée (75), dans une vue en plan, étant mise en forme sous la forme d'une double spirale, de sorte qu'un début (76) et une fin (77) de cette portion spiralée (75) s'avèrent être contigus l'un par rapport à l'autre et à l'extérieur de la même double spirale.

13. Système (100) selon la revendication 12, ladite double spirale comprenant une première spirale (78), ou une spirale sortante, s'étendant depuis le début (76) de la portion spiralée vers un point central (80) de la portion spiralée, et une seconde spirale (79), ou spirale de retour, s'étendant depuis ledit point central (80) vers l'extrémité (77) de la portion spiralée, ledit point central (80) raccordant, et étant partagé par, la première spirale et la seconde spirale, et ladite première spirale (78) et ladite seconde spirale (79) étant disposées, dans la double spirale, d'une manière telle qu'elles sont intercalées ou alternées l'une par rapport à l'autre, afin de réaliser, depuis l'extérieur vers l'intérieur de la double spirale, une alternance de bobines et de tours de la première spirale et de la seconde spirale.

14. Procédé de régulation de systèmes de chauffage (100), comprenant les étapes de :
- disposition d'au moins une conduite radiante (70) prévue pour l'installation dans un sol et configurée pour chauffer un espace, ladite conduite radiante (70) s'étendant entre une extrémité d'orifice d'entrée (71), qui est destinée à être fluidiquement raccordée à une source de liquide à haute température afin de recevoir le liquide à haute température de celle-ci, et une extrémité d'orifice de sortie (72), qui est destinée à être fluidiquement raccordée à un générateur de chaleur afin d'admettre à l'intérieur du liquide à basse température, ladite conduite radiante (70) comprenant, entre ladite extrémité d'orifice d'entrée et ladite extrémité d'orifice de sortie, une portion spiralée (75) configurée pour transmettre de la chaleur radiante depuis le liquide, s'écoulant à l'intérieur, vers l'extérieur ;
- disposition d'au moins un dispositif de régulation (1) pour systèmes de chauffage selon l'une quelconque des revendications 1 à 9, localisé en aval de ladite portion spiralée (75) et en amont de ladite extrémité d'orifice de sortie (72) de la conduite radiante (70) afin d'intercepter l'écoulement du liquide s'écoulant dans ladite conduite radiante, l'orifice d'entrée (3) du dispositif de régulation recevant le liquide provenant de ladite portion spiralée (75), et le dispositif (1) transmettant un débit pour ce liquide à l'orifice de sortie (4) du dispositif sur la base de la configuration de fonctionnement de l'élément vanne (10) du dispositif, et l'orifice de sortie (4) du dispositif (1) étant raccordé fluidiquement à ladite extrémité d'orifice de sortie (72) de la conduite radiante (70) ;
- mise en circulation d'un liquide dans ladite conduite radiante (70), dans laquelle le débit du liquide passant depuis l'orifice d'entrée (3) vers l'orifice de sortie (4) du dispositif (1), à travers ladite zone d'interception (5), est une fonction de la différence de température entre une température perçue du liquide au niveau dudit orifice d'entrée et une température de référence à laquelle l'élément vanne est configuré, et dans lequel le débit passant depuis l'orifice d'entrée (3) vers l'orifice de sortie (4) du dispositif (1) et transporté vers ladite extrémité d'orifice de sortie (72) de la conduite radiante (70) est égal au débit entrant au niveau de ladite extrémité d'orifice d'entrée (71) de la conduite radiante (70),
ladite étape de circulation d'un liquide dans ladite conduite radiante (70) comprenant une étape de maintien d'un débit résiduel, supérieur à zéro, du liquide transféré depuis l'orifice d'entrée (3) vers l'orifice de sortie (4) du dispositif (1), lorsque l'élément vanne (10) est trouvé dans ladite configuration fermée.

15. Procédé selon la revendication précédente, dans lequel, dans ladite étape de maintien d'un débit résiduel de liquide, le débit résiduel de liquide est compris entre 2 litres/heure et 8 litres/heure ou compris entre 3 litres/heure et 6 litres/heure ou compris entre 3,5 litres/heure et 5 litres/heure.
